# EUROPEAN PATENT APPLICATION

(11) **EP 4 564 059 A1**
(43) Date of publication of application: **04.06.2025**
(21) Application number: 23851426.9
(22) Date of filing: 28.06.2023
(51) Int. Cl.: G01S 19/12

(54) **POSITIONING METHOD AND APPARATUS**

(30) Priority: 09.08.2022 CN 202210958322
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jingwei, Shenzhen, Guangdong 518129 (CN); TIE, Xiaolei, Shenzhen, Guangdong 518129 (CN)
(74) Representative: Maiwald GmbH
(86) International application number: PCT/CN2023/103458
(87) International publication number: WO 2024/032199

(57) **Abstract**

A positioning method and an apparatus are provided, to position a terminal by using a satellite. The method includes: obtaining information about a plurality of satellite reference points (S501); determining time information corresponding to a service satellite (S502); reporting, to the service satellite, time information corresponding to the plurality of satellite reference points and the time information corresponding to the service satellite (S503); determining a position of a terminal device based on the time information corresponding to the service satellite and the time information corresponding to the plurality of satellite reference points (S504). According to the method, there is no need to actually deploy satellites at the satellite reference points. In addition, in comparison with a single satellite moving to different positions to position the terminal device, the method can reduce a positioning delay and improve positioning accuracy.

## Description

### CROSS-REFERENCE TO RELATED APPLICATIONS

This application claims priority to Chinese Patent Application No. 202210958322.1, filed with the China National Intellectual Property Administration on August 9, 2022 and entitled "POSITIONING METHOD AND APPARATUS", which is incorporated herein by reference in its entirety.

### TECHNICAL FIELD

This application relates to the field of communication technologies, and in particular, to a positioning method and an apparatus.

### BACKGROUND

In conventional cellular network positioning, a terminal measures a downlink reference signal, or a base station measures an uplink reference signal; and reports a measurement result to a positioning server. The positioning server determines a position of the terminal based on the measurement result and a position of the base station.

The cellular network positioning depends on a plurality of base stations for positioning. In a satellite communication scenario, a plurality of satellites are also required for positioning. However, when the terminal is positioned, the terminal may not be covered by a plurality of satellites. As a result, the terminal device cannot be positioned. In addition, synchronization between the terminal and the plurality of satellites brings complexity to the terminal. Therefore, a scenario in which a plurality of satellites jointly perform positioning has a great limitation.

### SUMMARY

This application provides a positioning method and an apparatus, to position a terminal by using a satellite.

According to a first aspect, a positioning method is provided. The method may be performed by a terminal device or a chip, a chip system, or a circuit located in a terminal device. The method may be implemented by using the following steps: obtaining information about a plurality of satellite reference points; determining time information corresponding to a service satellite; reporting, to the service satellite, time information corresponding to the plurality of satellite reference points and the time information corresponding to the service satellite. The time information corresponding to the plurality of satellite reference points is determined based on the time information corresponding to the service satellite and the information about the plurality of satellite reference points.

In embodiments of this application, time information corresponding to a satellite located at a satellite reference point may be determined based on information about the satellite reference point. There is no need to actually deploy satellites at the satellite reference points. In comparison with an actual deployment of a plurality of satellites for positioning the terminal device, this application has a small limitation. In addition, in comparison with a single satellite moving to different positions to position the terminal device, this application can reduce a positioning delay, and can further improve positioning accuracy.

In a possible design, a terminal device may determine, based on position information of an i^{th} satellite reference point and position information of the service satellite, a time difference between duration of transmission between the satellite reference point and the terminal device and duration of transmission between the service satellite and the terminal device, and determine, based on the time difference and the time information corresponding to the satellite reference point, time information corresponding to the satellite reference point.

In a possible design, the time information corresponding to the service satellite is a moment at which a downlink signal of the service satellite is received.

In a possible design, time information corresponding to the i^{th} satellite reference point may be a moment tᵢ at which a downlink signal of the satellite reference point is received. tᵢ satisfies the following formula: tᵢ = t₀ + Δt1. t₀ is the time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the time information corresponding to the service satellite is a frame number of a downlink signal of the service satellite.

In a possible design, the time information corresponding to the i^{th} satellite reference point may be a frame number Wᵢ of a downlink signal of the satellite reference point. Wᵢ satisfies the following formula: Wᵢ = W₀ + w. W₀ is time information corresponding to the service satellite. w is a quantity of frames corresponding to a time difference between duration of transmission between the i^{th} satellite reference point and the terminal device and duration of transmission between the service satellite and the terminal device. Alternatively, time information corresponding to the i^{th} satellite reference point is a time difference between duration of transmission between the i^{th} satellite reference point and the terminal device and duration of transmission between the service satellite and the terminal device.

In a possible design, the time information corresponding to the service satellite is a time difference between a time at which a downlink signal of the service satellite is received and a time at which the downlink signal is sent by the service satellite.

In a possible design, the time information corresponding to the i^{th} satellite reference point may be a time difference ΔTi between a time at which a downlink signal of the satellite reference point is received and a time at which the downlink signal is sent by the satellite reference point. ΔTi satisfies the following formula: ΔTi = ΔT0 + Δt1. ΔT0 is time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the time information corresponding to the service satellite is a time difference between a time at which a downlink signal of the service satellite is received and a time at which an uplink signal is sent to the service satellite.

In a possible design, the time information corresponding to the i^{th} satellite reference point may be a time difference Δi between a time at which a downlink signal of the satellite reference point is received and a time at which an uplink signal is sent to the satellite reference point. Δi satisfies the following formula: Δi = Δ0 - 2Δt1. Δ0 is time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the time information corresponding to the service satellite is a TA for sending an uplink signal to the service satellite.

In a possible design, the time information corresponding to the i^{th} satellite reference point may be a TA (referred to as TAᵢ below) for sending an uplink signal to the satellite reference point. TAᵢ satisfies the following formula: TAᵢ = TA₀ - Δt1. TA₀ is time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the determining time information corresponding to a service satellite includes: obtaining a common TA, where the common TA is used for representing a round trip delay from the service satellite to an uplink synchronization common point; and determining, based on the common TA, the time information corresponding to the service satellite.

In a possible design, the information about the plurality of satellite reference points is position information. In the foregoing design, a plurality of virtual satellites may be constructed based on a plurality of positions to position the terminal device, so that there is no need to actually deploy satellites.

In a possible design, the obtaining information about a plurality of satellite reference points includes: receiving the position information of the plurality of satellite reference points from the service satellite.

In a possible design, the position information of the plurality of satellite reference points is absolute coordinates, or the position information of the plurality of satellite reference points is relative coordinates relative to the service satellite. In comparison with sending ephemeris information, the foregoing design can reduce signaling overheads.

In a possible design, positions of the plurality of satellite reference points are located on a moving trajectory of the service satellite and/or a moving trajectory of another satellite.

In a possible design, the information about the plurality of satellite reference points is time points corresponding to the plurality of satellite reference points. In the foregoing manner, positions of a plurality of satellites may be determined based on the time points and the moving trajectory of the service satellite (or the another satellite), and a plurality of virtual satellites may be constructed based on the positions of the plurality of satellites to position the terminal device, so that there is no need to actually deploy satellites.

In a possible design, the plurality of time points are absolute times.

In a possible design, the plurality of time points are relative times. In the foregoing manner, signaling overheads can be reduced.

According to a second aspect, a positioning method is provided. The method may be performed by a satellite or a chip, a chip system, or a circuit located in a satellite. The method may be implemented by using the following steps: receiving time information corresponding to a service satellite and time information corresponding to a plurality of satellite reference points that are sent by a terminal device, where the time information corresponding to the plurality of satellite reference points is determined based on the time information corresponding to the service satellite and information about the plurality of satellite reference points; and determining a position of the terminal device based on the time information corresponding to the service satellite and the time information corresponding to the plurality of satellite reference points.

In embodiments of this application, time information corresponding to a satellite located at a satellite reference point may be determined based on information about the satellite reference point. There is no need to actually deploy satellites at the satellite reference points. In comparison with an actual deployment of a plurality of satellites for positioning the terminal device, this application has a small limitation. In addition, in comparison with a single satellite moving to different positions to position the terminal device, this application can reduce a positioning delay, and can further improve positioning accuracy.

In a possible design, a terminal device may determine, based on position information of an i^{th} satellite reference point and position information of the service satellite, a time difference between duration of transmission between the satellite reference point and the terminal device and duration of transmission between the service satellite and the terminal device, and determine, based on the time difference and the time information corresponding to the satellite reference point, time information corresponding to the satellite reference point.

In a possible design, the time information corresponding to the service satellite is a moment at which a downlink signal of the service satellite is received.

In a possible design, time information corresponding to the i^{th} satellite reference point may be a moment tᵢ at which a downlink signal of the satellite reference point is received. tᵢ satisfies the following formula: tᵢ = t₀ + Δt1. t₀ is the time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the time information corresponding to the service satellite is a frame number of a downlink signal of the service satellite.

In a possible design, the time information corresponding to the i^{th} satellite reference point may be a frame number Wᵢ of a downlink signal of the satellite reference point. Wᵢ satisfies the following formula: Wᵢ = W₀ + w. W₀ is time information corresponding to the service satellite. w is a quantity of frames corresponding to a time difference between duration of transmission between the i^{th} satellite reference point and the terminal device and duration of transmission between the service satellite and the terminal device. Alternatively, time information corresponding to the i^{th} satellite reference point is a time difference between duration of transmission between the i^{th} satellite reference point and the terminal device and duration of transmission between the service satellite and the terminal device.

In a possible design, the time information corresponding to the service satellite is a time difference between a time at which a downlink signal of the service satellite is received and a time at which the downlink signal is sent by the service satellite.

In a possible design, the time information corresponding to the i^{th} satellite reference point may be a time difference ΔTi between a time at which a downlink signal of the satellite reference point is received and a time at which the downlink signal is sent by the satellite reference point. ΔTi satisfies the following formula: ΔTi = ΔT0 + Δt1. ΔT0 is time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the time information corresponding to the service satellite is a time difference between a time at which a downlink signal of the service satellite is received and a time at which an uplink signal is sent to the service satellite.

In a possible design, the time information corresponding to the i^{th} satellite reference point may be a time difference Δi between a time at which a downlink signal of the satellite reference point is received and a time at which an uplink signal is sent to the satellite reference point. Δi satisfies the following formula: Δi = Δ0 - 2Δt1. Δ0 is time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the time information corresponding to the service satellite is a TA for sending an uplink signal to the service satellite.

In a possible design, the time information corresponding to the i^{th} satellite reference point may be a TA (referred to as TAᵢ below) for sending an uplink signal to the satellite reference point. TAᵢ satisfies the following formula: TAᵢ = TA₀ - Δt1. TA₀ is time information corresponding to the service satellite. Δt1 is a time difference between duration of transmission between the i^{th} satellite reference point and the terminal device and duration of transmission between the service satellite and the terminal device. Alternatively, time information corresponding to the i^{th} satellite reference point is a time difference Δt1 between duration of transmission between the i^{th} satellite reference point and the terminal device and duration of transmission between the service satellite and the terminal device.

In a possible design, the information about the plurality of satellite reference points is position information. In the foregoing design, a plurality of virtual satellites may be constructed based on a plurality of positions to position the terminal device, so that there is no need to actually deploy satellites.

In a possible design, the method further includes: sending the position information of the plurality of satellite reference points to the terminal device.

In a possible design, the position information of the plurality of satellite reference points is absolute coordinates, or the position information of the plurality of satellite reference points is relative coordinates relative to the service satellite. In comparison with sending ephemeris information, the foregoing design can reduce signaling overheads.

In a possible design, positions of the plurality of satellite reference points are located on a moving trajectory of the service satellite and/or a moving trajectory of another satellite.

In a possible design, the information about the plurality of satellite reference points is time points corresponding to the plurality of satellite reference points. In the foregoing manner, positions of a plurality of satellites may be determined based on the time points and the moving trajectory of the service satellite (or the another satellite), and a plurality of virtual satellites may be constructed based on the positions of the plurality of satellites to position the terminal device, so that there is no need to actually deploy satellites.

In a possible design, the plurality of time points are absolute times.

In a possible design, the plurality of time points are relative times. In the foregoing manner, signaling overheads can be reduced.

In a possible design, before the determining a position of the terminal device based on the time information corresponding to the service satellite and the time information corresponding to the plurality of satellite reference points, the method further includes: correcting, based on a time at which the uplink reference signal sent by the terminal device is received, the time information corresponding to the service satellite and the time information corresponding to the plurality of satellite reference points. In this manner, positioning accuracy of the terminal device can be further improved.

According to a third aspect, this application further provides a communication apparatus. The apparatus is a terminal device or a chip in a terminal device. The communication apparatus has a function of implementing any method provided in the first aspect. The communication apparatus may be implemented by hardware, or may be implemented by hardware executing corresponding software. The hardware or the software includes one or more units or modules corresponding to the foregoing functions.

**In** a possible design, the communication apparatus includes a processor. The processor is configured to support the communication apparatus in performing a corresponding function of the terminal device shown in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a service satellite, for example, data or signal receiving and sending. For example, a communication interface may be a transceiver, a circuit, a bus, a module, or another type of communication interface.

**In** a possible design, the communication apparatus includes corresponding functional modules respectively configured to implement the steps in the foregoing methods. The function may be implemented by hardware, or may be implemented by hardware executing corresponding software. The hardware or software includes one or more modules corresponding to the foregoing functions.

In a possible design, a structure of the communication apparatus includes a processing unit (or a processing unit) and a communication unit (or a communication unit). These units may perform corresponding functions in the foregoing method examples. For details, refer to the descriptions in the method provided in the first aspect. Details are not described herein again.

According to a fourth aspect, this application further provides a communication apparatus. The apparatus is a satellite or a chip in a satellite. The communication apparatus has a function of implementing any method provided in the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the service satellite shown in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device, for example, data or signal receiving and sending. For example, a communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by hardware executing corresponding software. The hardware or software includes one or more modules corresponding to the foregoing functions.

In a possible design, a structure of the communication apparatus includes a processing unit (or a processing unit) and a communication unit (or a communication unit). These units may perform corresponding functions in the foregoing method examples. For details, refer to the descriptions in the method provided in the second aspect. Details are not described herein again.

According to a fifth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in any one of the first aspect and the possible designs by using a logic circuit or by executing code instructions.

According to a sixth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in any one of the second aspect and the possible designs by using a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory. The chip system is configured to implement the method in any one of the first aspect or the second aspect and the possible designs. The chip system may include a chip, or may include a chip and another discrete component.

According to a tenth aspect, a communication system is provided. The system includes the apparatus (for example, a terminal device) in the first aspect and the apparatus (for example, a network device) in the second aspect.

For technical effects that can be achieved by the technical solutions in any one of the third aspect to the tenth aspect, refer to descriptions of technical effects that can be achieved by the technical solutions in either of the first aspect. Details are not described herein again.

### BRIEF DESCRIPTION OF DRAWINGS

FIG. 1 is a diagram of a positioning method based on an uplink time of arrival according to an embodiment of this application;
FIG. 2 is a diagram of a positioning method based on an uplink angle of arrival according to an embodiment of this application;
FIG. 3 is a diagram of a positioning method based on a reference signal received power according to an embodiment of this application;
FIG. 4a is a diagram of an architecture of satellite communication according to an embodiment of this application;
FIG. 4b is a diagram of an architecture of satellite communication according to an embodiment of this application;
FIG. 4c is a diagram of an architecture of satellite communication according to an embodiment of this application;
FIG. 5 is a schematic flowchart of a positioning method according to an embodiment of this application;
FIG. 6 is a diagram of transmission duration according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

There are a plurality of methods for positioning a terminal device in a terrestrial communication network. For example, the terminal device is positioned based on a delay, a delay difference, a receiving angle, and the like of a reference signal. Several common positioning methods are separately described below.

### -Uplink time of arrival (uplink time of arrival, UL-TOA) method

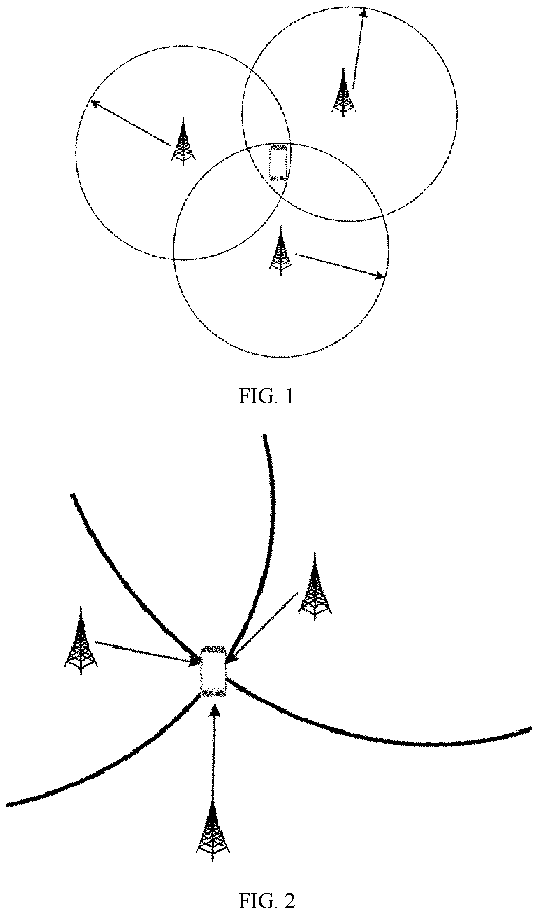

A plurality of base stations each measure a time of arrival of a received reference signal sent by the terminal device, and calculate a distance between the base station and the terminal device based on the time of arrival and the speed of light. Each base station draws a circle by using the base station as a center and the distance between the base station and the terminal device as a radius, as shown in FIG. 1. Then, a position of the terminal device is estimated according to a positioning algorithm such as a trilateral positioning algorithm or a least square algorithm.

### -Uplink time difference of arrival (uplink time difference of arrival, UL-TDOA) method

A disadvantage of the UL-TOA method is that if times are not synchronized between the base station and the terminal device, neither the base station nor the terminal device knows absolute times for sending a signal, resulting in a calculation and positioning error.

However, in the UL-TDOA method, a difference between distances from the terminal device to two base stations is calculated by measuring a time difference of arrival of signals between the terminal device and the two base stations. From a mathematical perspective, the terminal device is located on a hyperbola that uses the two base stations as focal points and uses the difference between the distances from the terminal device to the two base stations as a fixed difference. Positions of the terminal device and a plurality of base stations are on the hyperbola that uses the two base stations as the focal points and uses the distance difference as the fixed difference. According to the foregoing principle, a plurality of hyperbolas may be obtained by using three or more base stations around the terminal device. An intersection point of the hyperbolas may be the position of the terminal device, as shown in FIG. 2.

### -Uplink angle of arrival (uplink angle of arrival, UL-AOA) method

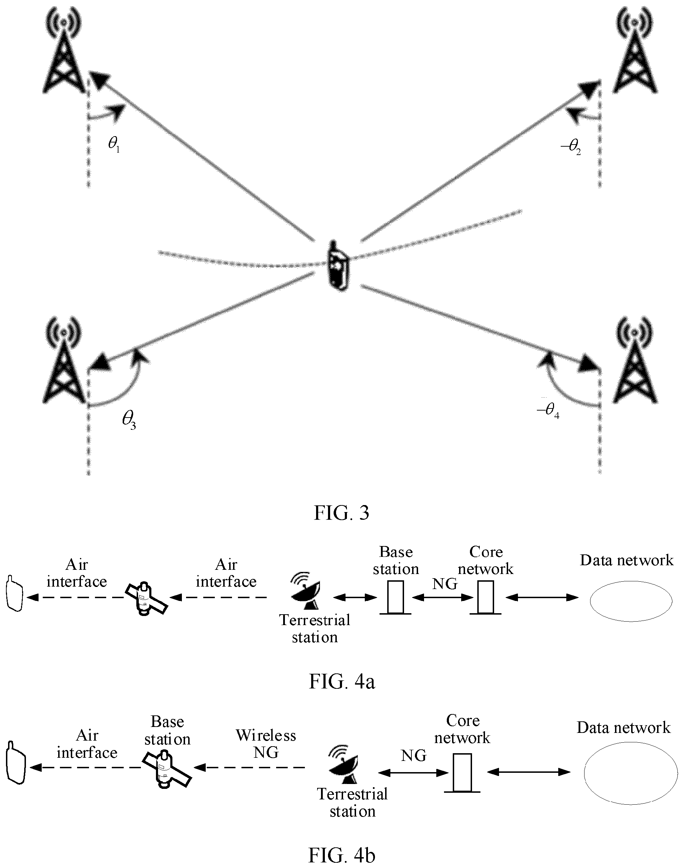

Base stations measure angles of arrival, for example, *θ*₁, -*θ*₂, *θ*₃, and -*θ*₄ in FIG. 3, based on beams for sending reference signals by the terminal device, and then send the angles of arrival obtained through measurement to a network device used for positioning. The network device positions the terminal device based on a position of each base station and the angle of arrival obtained through measurement by the base station.

### -Reference signal received power (reference signal received power, RSRP) method

A value of power at which reference signals reflected by the terminal device are received by a plurality of surrounding base stations is measured. A ratio of distances between the terminal device and the plurality of base stations may be determined based on the measured power. Then, the terminal device is positioned based on a position of each base station and the ratio of the distances between the terminal device and the plurality of base stations.

All of the foregoing methods depend on a case in which a plurality of base stations receives, for measurement, the reference signals sent by the terminal device. However, in a satellite communication scenario, a scenario in which the terminal device is located in coverage areas of the plurality of satellites is rare. Therefore, terminal device positioning jointly performed by the plurality of satellites has a great limitation.

In a possible positioning method based on a single satellite, when a satellite moves to different positions, the terminal device reports TA information. The TA information indicates a round trip time (round trip time, RTT) between the terminal device and an uplink synchronization point. For example, if the uplink synchronization point is on a satellite, the TA information indicates an RTT between the terminal device and the satellite. A network side may consider that a satellite moving to different positions is equivalent to a plurality of base stations at different positions, and the network side determines a position of the terminal device based on a plurality of collected TAs.

However, a delay is introduced when positioning is performed based on different positions of a single satellite. To ensure a difference between TAs, a quantity of times of positioning that can be performed in an entire service time is limited. In addition, because satellite positions vary in a same orbit and have no significant difference, an error of positioning performed by the single satellite leads to accuracy of positioning performed by the single satellite not as high as accuracy of positioning performed by a plurality of satellites. Therefore, how to position the terminal device based on the single satellite is an urgent problem to be resolved.

In view of this, embodiments of this application provide a positioning method that can be applied to a satellite communication scenario, to satisfy a requirement for a single satellite to position a terminal device.

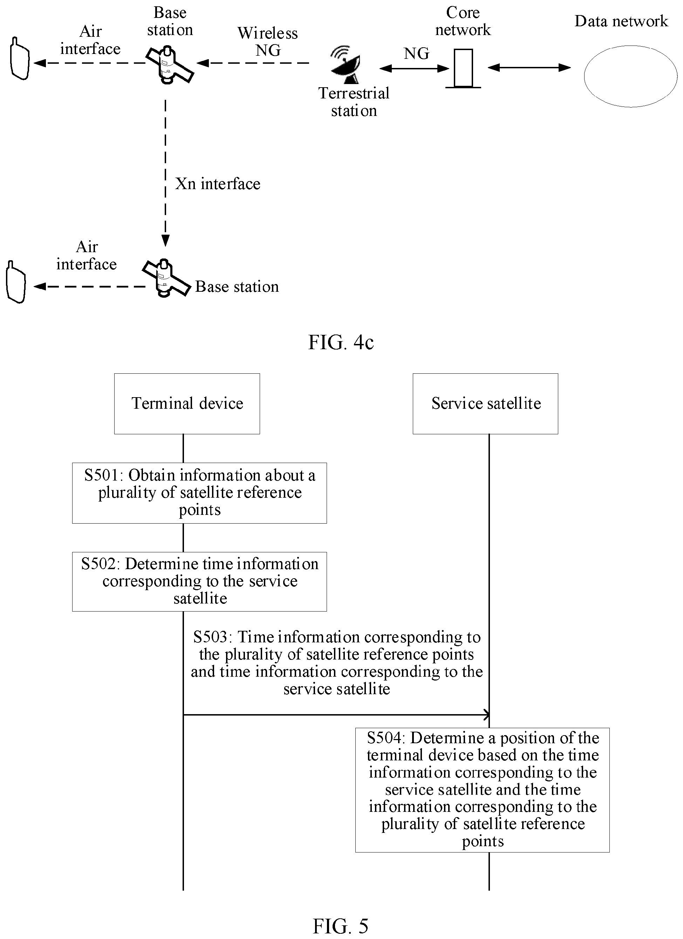

FIG. 4a, FIG. 4b, and FIG. 4c provide examples of possible application architectures of satellite communication. The positioning method provided in embodiments of this application can be applied to any one of the network architectures in FIG. 4a, FIG. 4b, and FIG. 4c.

In the architecture shown in FIG. 4a, a base station is deployed on the ground, a satellite is connected to a terrestrial station through an air interface, and the terrestrial station may be connected to the base station through a wireless or wired link. A terminal device on the ground accesses a mobile communication network through an air interface (where there may be various types of air interfaces, for example, a 5G air interface), and the satellite is used as a transmission node to forward information about the terminal device.

In the architecture shown in FIG. 4b, a base station is deployed on a satellite, the satellite is connected to a terrestrial station through an air interface, and the terrestrial station may be connected to a core network through a wireless or wired link. A terminal device on the ground communicates with the satellite base station through the air interface, to access a mobile communication network. As a base station, the satellite is connected to the terrestrial station through an NG interface of the air interface, and the terrestrial station is connected to the core network through the NG interface. The NG interface may be in a wireless form or a wired form.

In comparison with the architecture shown in FIG. 4b, in the architecture shown in FIG. 4c, a communication scenario between satellite base stations is added. Specifically, the satellite base stations may communicate with each other through an Xn interface.

In FIG. 4a to FIG. 4c, the terminal device may include various types of terminal devices that support new radio, for example, a mobile phone, a tablet computer, a vehicle-mounted terminal device, and a wearable terminal device. The terminal device may access a satellite network through an air interface and initiate a service such as a call or Internet access.

The base station is mainly configured to provide a radio access service, schedule a radio resource to an accessing terminal device, and provide a reliable radio transmission protocol, data encryption protocol, and the like.

The core network is mainly configured to provide functions such as user access control, mobility management, session management, user security authentication, and charging. The core network includes a plurality of functional units, and may be classified into control-plane functional entities and data-plane functional entities. An access and mobility management function (AMF) entity is configured to be responsible for user access management, security authentication, mobility management, and the like. A user plane function (UPF) entity is configured to be responsible for functions such as managing user plane data transmission and traffic statistics.

The terrestrial station is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as handover.

The NG interface indicates an interface between the base station and the core network, an interface between the terrestrial station and the core network, or an interface between the satellite base station and the terrestrial station (where in which case, the interface is a radio link), and is mainly for exchanging signaling such as NAS of the core network and service data of a user.

FIG. 5 is a schematic flowchart of a positioning method according to an embodiment of this application. The positioning method may be applied to a satellite communication scenario, and in particular, to a non-geostationary earth orbit (non-geostationary earth orbit, NGEO) satellite communication scenario or an uncrewed aerial vehicle communication scenario. The uncrewed aerial vehicle communication scenario is similar to the satellite communication scenario. For ease of description, the following uses the satellite communication scenario as an example for description.

As shown in FIG. 5, the positioning method may include the following steps.

S501: A terminal device obtains information about a plurality of satellite reference points.

In an example description, the information about the plurality of satellite reference points may be position information. Based on a possible implementation of the example description, a service satellite sends the position information of the plurality of satellite reference points to the terminal device.

The position information of the plurality of satellite reference points may be absolute coordinates, for example, coordinates (x, y, z) in an absolute coordinate system, or the position information of the plurality of satellite reference points may be relative coordinates relative to the service satellite, for example, (Δx, Δy, Δz). In comparison with broadcasting an ephemeris that includes a speed and coordinates, broadcasting position information of a satellite reference point may reduce signaling overheads on a network side.

Optionally, in the foregoing example description, positions of the plurality of satellite reference points may be located on a moving trajectory of the service satellite and/or a moving trajectory of another satellite. Alternatively, positions of the plurality of satellite reference points may be irrelevant to a moving trajectory of the service satellite and/or a moving trajectory of another satellite.

In another example description, the information about the plurality of satellite reference points may be time information corresponding to the plurality of satellite reference points.

Optionally, in the example description, positions of the plurality of satellite reference points may be located on a moving trajectory of the service satellite and/or a moving trajectory of another satellite. Therefore, the terminal device and the service satellite may determine the positions of the plurality of satellite reference points based on the time information corresponding to the plurality of satellite reference points and the moving trajectory of the service satellite and/or the moving trajectory of the another satellite.

A plurality of time points may be absolute times. For example, the plurality of time points may be 00.00.00, 00.00.01, 00.00.02, and 00.00.03. Alternatively, a plurality of time points may be relative times. For example, a slot corresponding to a current position of the service satellite is a slot 1. The terminal device may perform a report in a time interval of one slot. To be specific, a first time point in the plurality of time points is delayed (or advanced) by one slot relative to the slot corresponding to the current position of the service satellite, a second time point is delayed (or advanced) by one slot relative to the first time point, a third time point is delayed (or advanced) by one slot relative to the second time point, and so on.

Based on an optional solution of the example description, the time information corresponding to the plurality of satellite reference points may be determined by the terminal device. Further, after determining the time information corresponding to the plurality of satellite reference points, the terminal device may further send the time information corresponding to the plurality of satellite reference points to the service satellite, so that the service satellite may determine the positions of the plurality of satellite reference points based on the time information corresponding to the plurality of satellite reference points and the moving trajectory of the service satellite and/or the moving trajectory of the another satellite.

Based on another optional solution of the example description, the time information corresponding to the plurality of satellite reference points may be indicated by the service satellite to the terminal device.

The time information corresponding to the plurality of satellite reference points may be past time points, or may be future time points; or time information corresponding to some satellite reference points may be past time points, and time information corresponding to the other satellite reference points may be future time points.

S502: The terminal device determines time information corresponding to the service satellite.

Optionally, before step S502, the terminal device may receive a downlink signal from the service satellite, or may send an uplink signal to the service satellite. A resource for sending the uplink signal may be configured by the service satellite.

S503: The terminal device reports, to the service satellite, the time information corresponding to the plurality of satellite reference points and the time information corresponding to the service satellite. Correspondingly, the service satellite receives, from the terminal device, the time information corresponding to the service satellite and the time information corresponding to the plurality of satellite reference points.

In this embodiment of this application, the terminal device may be positioned by the service satellite, or the terminal device may be positioned by another network device, for example, a base station, a transmission reception point (transmission reception point, TRP), or a core network element. For example, the core network element may be a location management function (location management function, LMF) network element, a positioning server, or the like.

If the terminal device is positioned by the another network device, the service satellite may forward, to the network device, the time information corresponding to the service satellite and the time information corresponding to the plurality of satellite reference points. For ease of understanding, this application uses an example in which the terminal device is positioned by the service satellite for description.

The time information corresponding to the plurality of satellite reference points is determined based on the time information corresponding to the service satellite and the information about the plurality of satellite reference points.

In an implementation, the terminal device may determine, in the following manner, the time information corresponding to the service satellite.

A1: Obtain a common TA, where the common TA is used for representing a round trip delay from the service satellite to an uplink synchronization common point.

The uplink synchronization common point may be a service satellite, or may be another network device such as a terrestrial base station.

Specifically, the service satellite may send the common TA to the terminal device.

A2: Determine, based on the common TA, the time information corresponding to the service satellite.

In an implementation, an i^{th} satellite reference point (referred to as a satellite reference point i below) in the plurality of satellite reference points is used as an example. The terminal device may determine, in the following manner, time information corresponding to the satellite reference point.

B1: Determine, based on position information of the satellite reference point i and position information of the service satellite, a time difference between duration of transmission between the satellite reference point i and the terminal device and duration of transmission between the service satellite and the terminal device (where the time difference is referred to as a transmission delay of the satellite reference point i below).

For example, the terminal device may determine, based on a position of the satellite reference point i and a position of the service satellite, that a time difference between duration of transmission between the satellite reference point i and the terminal device and duration of transmission between the service satellite and the terminal device is Δt1. If a distance between the satellite reference point i and the terminal device is greater than a distance between the service satellite and the terminal device, Δt1 may be a positive number. If a distance between the satellite reference point i and the terminal device is less than a distance between the service satellite and the terminal device, Δt1 may be a negative number. If a distance between the satellite reference point i and the terminal device is the same as a distance between the service satellite and the terminal device, Δt1 may be 0.

B2: Determine, based on the transmission delay of the satellite reference point i and the time information corresponding to the satellite reference point, time information corresponding to the satellite reference point i.

A specific determining process is described below with reference to an example of the time information corresponding to the service satellite.

The following describes five examples of the time information corresponding to the service satellite. It should be understood that merely example description is provided herein. Information that can represent transmission duration or an RTT between the service satellite and the terminal device may be used as the time information corresponding to the service satellite.

Example 1: The time information corresponding to the service satellite may be a moment t₀ at which the downlink signal of the service satellite is received. Correspondingly, the time information corresponding to the satellite reference point i may be a moment tᵢ at which a downlink signal of the satellite reference point is received.

In the example, tᵢ may satisfy: tᵢ = t₀ + Δt1.

In the example, it may be assumed that a time at which the satellite reference point i sends the downlink signal is the same as a time at which the service satellite sends the downlink signal.

Example 2: The time information corresponding to the service satellite is a frame number W₀ of the downlink signal of the service satellite. Correspondingly, the time information corresponding to the satellite reference point i may be a frame number Wᵢ of a downlink signal of the satellite reference point.

In the example, assuming that Δt1 corresponds to w frames, Wᵢ may satisfy: Wᵢ = W₀ + w.

In the example, it may be assumed that a time at which the satellite reference point i sends the downlink signal is the same as a time at which the service satellite sends the downlink signal.

Example 3: The time information corresponding to the service satellite is a time difference ΔT0 between a time at which the downlink signal of the service satellite is received and a time at which the downlink signal is sent by the service satellite. Correspondingly, the time information corresponding to the satellite reference point i may be a time difference ΔTi between a time at which a downlink signal of the satellite reference point i is received and a time at which the downlink signal is sent by the satellite reference point i.

In the example, the terminal device may determine a sending time of the downlink signal based on the downlink signal from the service satellite, and determine the time difference ΔT0 based on the sending time and a receiving time of the downlink signal.

In the example, ΔTi may satisfy: ΔTi = ΔT0 + Δt1.

In the example, the time at which the satellite reference point i sends the downlink signal may be the same as or different from the time at which the service satellite sends the downlink signal.

Example 4: The time information corresponding to the service satellite is a time difference Δ0 between a time at which the downlink signal of the service satellite is received and a time at which the uplink signal is sent to the service satellite. Correspondingly, the time information corresponding to the satellite reference point i may be a time difference Δi between a time at which a downlink signal of the satellite reference point i is received and a time at which an uplink signal is sent to the satellite reference point i.

In the example, Δi may satisfy: Δi = Δ0 - 2Δt1.

Example 5: The time information corresponding to the service satellite is a TA (referred to as TA₀ below) for sending the uplink signal to the service satellite. Correspondingly, the time information corresponding to the satellite reference point i may be a TA (referred to as TAᵢ below) for sending an uplink signal to the satellite reference point i.

In the example, TAᵢ may satisfy: TAᵢ = TA₀ - Δt1.

In an example description, the TA for sending the uplink signal to the service satellite and the TA for sending the uplink signal to the satellite reference point i may be open-loop TAs. The open-loop TA may be understood as a TA calculated by the terminal device based on a global navigation satellite system (global navigation satellite system, GNSS) and an ephemeris, that is, a TA on a service link side.

In another example description, the TA for sending the uplink signal to the service satellite and the TA for sending the uplink signal to the satellite reference point i may be a time difference between a downlink subframe #m and an uplink subframe #m. The time difference may be obtained by the terminal device through measurement. For example, the terminal device may determine the time difference between the downlink subframe #m and the uplink subframe #m based on a time at which the downlink subframe #m is detected and a time at which the uplink subframe #m is sent. For another example, the terminal device may determine the time difference between the downlink subframe #m and the uplink subframe #m based on a time at which the downlink subframe #m is detected, a time at which an uplink subframe #n is sent, and a time interval between the uplink subframe #m and the uplink subframe #n. For still another example, the terminal device may determine the time difference between the downlink subframe #m and the uplink subframe #m based on a time at which a downlink subframe #k is detected, a time at which the uplink subframe #m is sent, and a time interval between the downlink subframe #m and the downlink subframe #k. m, n, and k are integers not less than 0.

In still another example description, the TA for sending the uplink signal to the service satellite and the TA for sending the uplink signal to the satellite reference point i may be a sum of a time difference between a downlink subframe #m and an uplink subframe #m and a TA deviation detected by a network side. The TA deviation may be a positive number or a negative number. This is not specifically limited herein. In the example description, for a manner of determining the time difference between the downlink subframe #m and the uplink subframe #m, refer to the foregoing related descriptions. Details are not described herein again.

Optionally, the time information corresponding to the service satellite may be the information in any one of Example 1 to Example 5, and the time information corresponding to the satellite reference point i may be a transmission delay Δt1 of the satellite reference point i.

S504: The service satellite determines a position of the terminal device based on the time information corresponding to the service satellite and the time information corresponding to the plurality of satellite reference points.

The following describes step S504 with reference to the five examples of the time information corresponding to the service satellite.

Based on Example 1, the service satellite may determine a one-way delay between the service satellite and the terminal device based on the sending time of the downlink signal and the receiving time that is of the downlink signal and that is reported by the terminal device. In other words, the sending time of the downlink signal is subtracted from the receiving time of the downlink signal. Similarly, the service satellite may determine a one-way delay between a satellite reference point and the terminal device. Therefore, the service satellite may determine the position of the terminal device based on the one-way delay between the service satellite and the terminal device and one-way delays between the plurality of satellite reference points and the terminal device.

Based on Example 2, the service satellite may determine a one-way delay between the service satellite and the terminal device based on a frame number of the downlink signal sent by the service satellite and a frame number of the downlink signal reported by the terminal device. Similarly, the service satellite may determine a one-way delay between a satellite reference point and the terminal device. Therefore, the service satellite may determine the position of the terminal device based on the one-way delay between the service satellite and the terminal device and one-way delays between the plurality of satellite reference points and the terminal device.

Based on Example 3, the service satellite may determine a one-way delay between the service satellite and the terminal device based on a time difference that is between the time at which the downlink signal of the service satellite is received and the time at which the downlink signal is sent by the service satellite and that is reported by the terminal device. The one-way delay is the time difference. Similarly, the service satellite may determine a one-way delay between a satellite reference point and the terminal device. Therefore, the service satellite may determine the position of the terminal device based on the one-way delay between the service satellite and the terminal device and one-way delays between the plurality of satellite reference points and the terminal device.

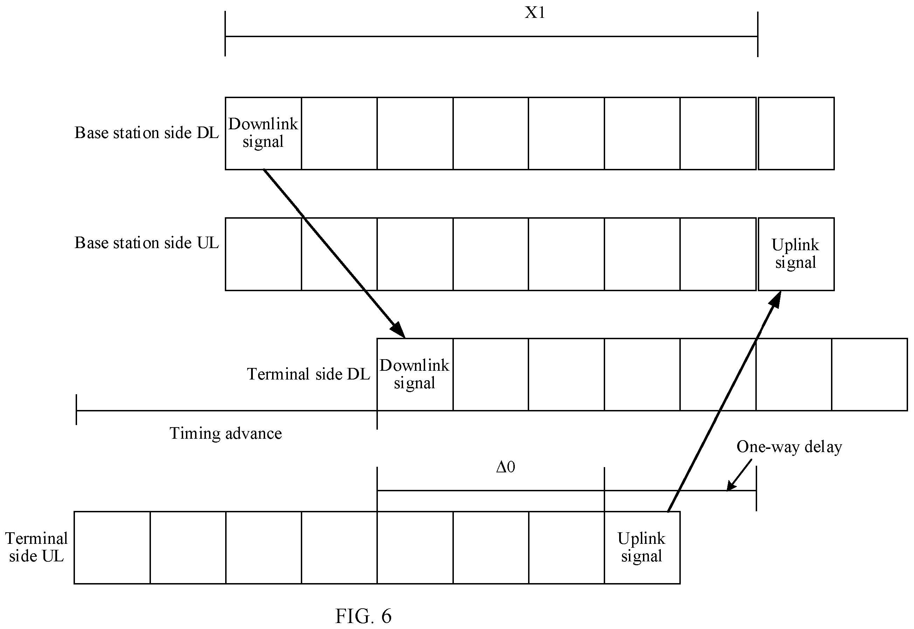

Based on Example 4, the service satellite may determine transmission duration X1 based on a sending time of the downlink signal and a receiving time of the uplink signal, and determine an RTT between the service satellite and the terminal device based on the transmission duration X1 and the time difference Δ0 reported by the terminal device. RTT = X1 - Δ0, as shown in FIG. 6.

Similarly, the service satellite may determine RTT between a satellite reference point and the terminal device. Therefore, the service satellite may determine the position of the terminal device based on the RTT between the service satellite and the terminal device and RTTs between the plurality of satellite reference points and the terminal device.

Based on Example 5, the service satellite may determine a one-way delay or an RTT between the service satellite and the terminal device based on the TA for sending the uplink signal to the service satellite. Similarly, the service satellite may determine a one-way delay or an RTT between a satellite reference point and the terminal device. Therefore, the service satellite may determine the position of the terminal device based on the one-way delay or the RTT between the service satellite and the terminal device and one-way delays or RTTs between the plurality of satellite reference points and the terminal device.

Optionally, based on Example 5, in a possible embodiment, before determining the position of the terminal device based on the time information corresponding to the service satellite and the time information corresponding to the plurality of satellite reference points, the service satellite may correct, based on a time at which the uplink reference signal sent by the terminal device is received, the time information corresponding to the service satellite and the time information corresponding to the plurality of satellite reference points.

Because there may be an error between a GNSS and an ephemeris of the terminal device, a TA estimated by the terminal device may be inaccurate. In the foregoing manner, the time information corresponding to the service satellite and the time information corresponding to the plurality of satellite reference points are corrected based on a time at which an uplink reference signal sent by the terminal device is received, so that positioning accuracy of the terminal device can be improved.

In a possible implementation, if the terminal device is positioned by another network device, the service satellite may send, to the network device, a time at which an uplink reference signal sent by the terminal device is received, and the network device corrects the time information corresponding to the service satellite and the time information corresponding to the plurality of satellite reference points.

Alternatively, the service satellite may send corrected time information of the service satellite and corrected time information of the plurality of satellite reference points to the network device.

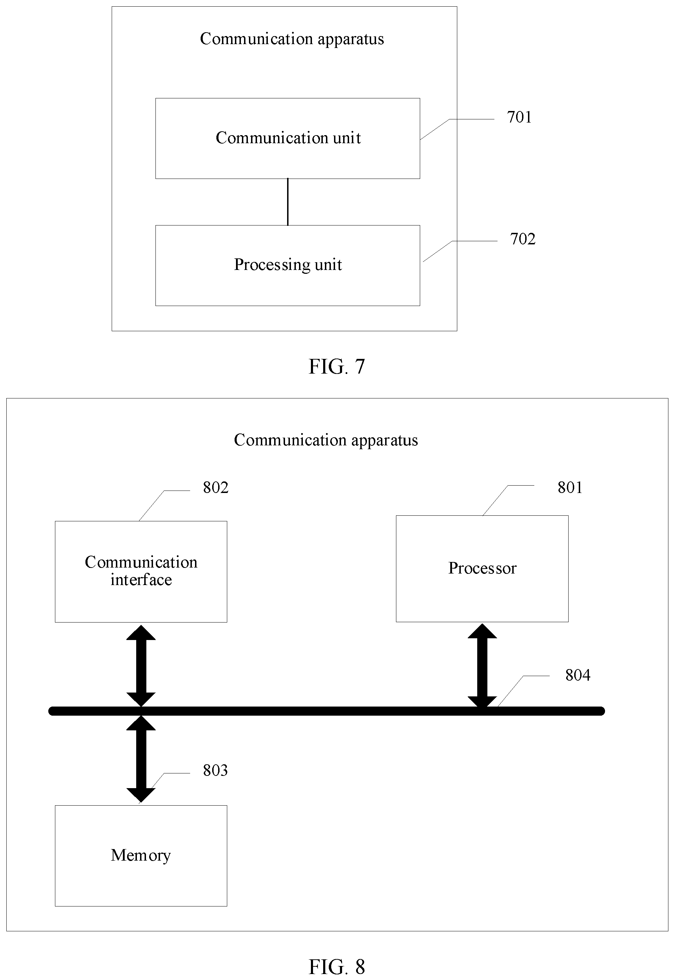

Based on a same inventive concept as the method embodiments, an embodiment of this application provides a communication apparatus. A structure of the communication apparatus may be shown in FIG. 7. The communication apparatus includes a communication unit 701 and a processing unit 702.

In an implementation, the communication apparatus may be specifically configured to implement the method performed by the terminal device in the embodiment in FIG. 5. The apparatus may be the terminal device, or may be a chip or a chip set in the terminal device or a part of a chip that is configured to perform a related method function. The processing unit 702 is configured to obtain information about a plurality of satellite reference points, and determine time information corresponding to a service satellite. The communication unit 701 is configured to report, to the service satellite, time information corresponding to the plurality of satellite reference points and the time information corresponding to the service satellite, where the time information corresponding to the plurality of satellite reference points is determined based on the time information corresponding to the service satellite and the information about the plurality of satellite reference points.

For example, the time information corresponding to the service satellite is a moment at which a downlink signal of the service satellite is received; or
the time information corresponding to the service satellite is a frame number of a downlink signal of the service satellite; or
the time information corresponding to the service satellite is a time difference between a time at which a downlink signal of the service satellite is received and a time at which the downlink signal is sent by the service satellite; or
the time information corresponding to the service satellite is a time difference between a time at which a downlink signal of the service satellite is received and a time at which an uplink signal is sent to the service satellite; or
the time information corresponding to the service satellite is a timing advance TA for sending an uplink signal to the service satellite.

Optionally, when determining the time information corresponding to the service satellite, the processing unit 702 is specifically configured to: obtain a common TA, where the common TA is used for representing a round trip delay from the service satellite to an uplink synchronization common point; and determine, based on the common TA, the time information corresponding to the service satellite.

For example, the information about the plurality of satellite reference points is position information.

Optionally, when obtaining the information about the plurality of satellite reference points, the processing unit 702 is specifically configured to: receive the position information of the plurality of satellite reference points from the service satellite by using the communication unit 701.

For example, the position information of the plurality of satellite reference points is absolute coordinates, or the position information of the plurality of satellite reference points is relative coordinates relative to the service satellite.

For example, positions of the plurality of satellite reference points are located on a moving trajectory of the service satellite and/or a moving trajectory of another satellite.

For example, the information about the plurality of satellite reference points is time points corresponding to the plurality of satellite reference points.

For example, the plurality of time points are absolute times, or the plurality of time points are relative times.

In an implementation, the communication apparatus shown in FIG. 7 may be specifically configured to implement the method performed by the service satellite in the embodiment in FIG. 5. The apparatus may be the service satellite, or may be a chip or a chip set in the service satellite or a part of a chip that is configured to perform a related method function. A communication unit 701 is configured to receive time information corresponding to a service satellite and time information corresponding to a plurality of satellite reference points that are sent by a terminal device, where the time information corresponding to the plurality of satellite reference points is determined based on the time information corresponding to the service satellite and information about the plurality of satellite reference points. A processing unit 702 is configured to determine a position of the terminal device based on the time information corresponding to the service satellite and the time information corresponding to the plurality of satellite reference points.

For example, the time information corresponding to the service satellite is a moment at which a downlink signal of the service satellite is received; or
the time information corresponding to the service satellite is a frame number of a downlink signal of the service satellite; or
the time information corresponding to the service satellite is a time difference between a time at which a downlink signal of the service satellite is received and a time at which the downlink signal is sent by the service satellite; or
the time information corresponding to the service satellite is a time difference between a time at which a downlink signal of the service satellite is received and a time at which an uplink signal is sent to the service satellite; or
the time information corresponding to the service satellite is a timing advance TA for sending an uplink signal to the service satellite.

For example, the information about the plurality of satellite reference points is position information.

Optionally, the communication unit 701 is further configured to send the position information of the plurality of satellite reference points to the terminal device.

For example, the position information of the plurality of satellite reference points is absolute coordinates, or the position information of the plurality of satellite reference points is relative coordinates relative to the service satellite.

For example, positions of the plurality of satellite reference points are located on a moving trajectory of the service satellite and/or a moving trajectory of another satellite.

For example, the information about the plurality of satellite reference points is time points corresponding to the plurality of satellite reference points.

For example, the plurality of time points are absolute times, or the plurality of time points are relative times.

Optionally, the processing unit 702 is further configured to: before determining the position of the terminal device based on the time information corresponding to the service satellite and the time information corresponding to the plurality of satellite reference points, correct, based on a time at which the uplink reference signal sent by the terminal device is received, the time information corresponding to the service satellite and the time information corresponding to the plurality of satellite reference points.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in the form of hardware, or may be implemented in the form of a software functional module. It may be understood that for functions or implementations of the modules in this embodiment of this application, further refer to related description in the method embodiments.

In a possible manner, a communication apparatus may be shown in FIG. 8. The apparatus may be a communication device or a chip in a communication device. The communication device may be the terminal device in the foregoing embodiment or the network device in the foregoing embodiment. The apparatus includes a processor 801 and a communication interface 802, and may further include a memory 803. The processing unit 702 may be the processor 801. The communication unit 701 may be a communication interface 802. Optionally, the processor 801 and the memory 803 may also be integrated together.

The processor 801 may be a CPU, a digital processing unit, or the like. The communication interface 802 may be a transceiver, may be an interface circuit such as a transceiver circuit, may be a transceiver chip, or the like. The apparatus further includes the memory 803, configured to store a program executed by the processor 801. The memory 803 may be a non-volatile memory such as a hard disk drive (hard disk drive, HDD) or a solid-state disk (solid-state disk, SSD), or may be a volatile memory (volatile memory) such as a random access memory (random access memory, RAM). The memory 803 is any other medium that can be used to carry or store expected program code in the form of instructions or a data structure and that can be accessed by a computer, but is not limited thereto.

The processor 801 is configured to execute the program code stored in the memory 803, and is specifically configured to perform an action of the processing unit 702. Details are not described herein again in this application. The communication interface 802 is specifically configured to perform an action of the communication unit 701. Details are not described herein again in this application.

In embodiments of this application, a specific connection medium between the communication interface 802, the processor 801, and the memory 803 is not limited. In embodiments of this application, the memory 803, the processor 801, and the communication interface 802 are connected via a bus 804 in FIG. 8. The bus is represented by using a bold line in FIG. 8. A connection manner between other components is merely an example for description, and is not limited thereto. The bus may be classified into an address bus, a data bus, a control bus, and like. For ease of representation, only one bold line is used to represent the bus in FIG. 8, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement a function of the terminal device in the embodiment shown in FIG. 5 and a communication apparatus configured to implement a function of the service satellite in the embodiment shown in FIG. 5.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use the form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be alternatively stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams.

It is clear that a person skilled in the art can make various modifications and variations to this application without departing from the scope of this application. In this case, provided that the modifications and variations made to this application fall within the scope of the claims of this application and equivalent techniques thereof, this application is also intended to cover such modifications and variations.

## Claims

1. A positioning method, wherein the method comprises:
obtaining information about a plurality of satellite reference points;
determining time information corresponding to a service satellite; and
reporting, to the service satellite, time information corresponding to the plurality of satellite reference points and the time information corresponding to the service satellite, wherein the time information corresponding to the plurality of satellite reference points is determined based on the time information corresponding to the service satellite and the information about the plurality of satellite reference points.

2. The method according to claim 1, wherein the time information corresponding to the service satellite is a moment at which a downlink signal of the service satellite is received; or
the time information corresponding to the service satellite is a frame number of a downlink signal of the service satellite; or
the time information corresponding to the service satellite is a time difference between a time at which a downlink signal of the service satellite is received and a time at which the downlink signal is sent by the service satellite; or
the time information corresponding to the service satellite is a time difference between a time at which a downlink signal of the service satellite is received and a time at which an uplink signal is sent to the service satellite; or
the time information corresponding to the service satellite is a timing advance TA for sending an uplink signal to the service satellite.

3. The method according to claim 1 or 2, wherein the determining time information corresponding to a service satellite comprises:
obtaining a common TA, wherein the common TA is used for representing a round trip delay from the service satellite to an uplink synchronization common point; and
determining, based on the common TA, the time information corresponding to the service satellite.

4. The method according to any one of claims 1 to 3, wherein the information about the plurality of satellite reference points is position information.

5. The method according to claim 4, wherein the obtaining information about a plurality of satellite reference points comprises:
receiving the position information of the plurality of satellite reference points from the service satellite.

6. The method according to claim 4 or 5, wherein the position information of the plurality of satellite reference points is absolute coordinates, or the position information of the plurality of satellite reference points is relative coordinates relative to the service satellite.

7. The method according to any one of claims 1 to 3, wherein positions of the plurality of satellite reference points are located on a moving trajectory of the service satellite and/or a moving trajectory of another satellite.

8. The method according to claim 7, wherein the information about the plurality of satellite reference points is time points corresponding to the plurality of satellite reference points.

9. The method according to claim 8, wherein the plurality of time points are absolute times, or the plurality of time points are relative times.

10. A positioning method, wherein the method comprises:
receiving time information corresponding to a service satellite and time information corresponding to a plurality of satellite reference points that are sent by a terminal device, wherein the time information corresponding to the plurality of satellite reference points is determined based on the time information corresponding to the service satellite and information about the plurality of satellite reference points; and
determining a position of the terminal device based on the time information corresponding to the service satellite and the time information corresponding to the plurality of satellite reference points.

11. The method according to claim 10, wherein the time information corresponding to the service satellite is a moment at which a downlink signal of the service satellite is received; or
the time information corresponding to the service satellite is a frame number of a downlink signal of the service satellite; or
the time information corresponding to the service satellite is a time difference between a time at which a downlink signal of the service satellite is received and a time at which the downlink signal is sent by the service satellite; or
the time information corresponding to the service satellite is a time difference between a time at which a downlink signal of the service satellite is received and a time at which an uplink signal is sent to the service satellite; or
the time information corresponding to the service satellite is a timing advance TA for sending an uplink signal to the service satellite.

12. The method according to claim 10 or 11, wherein the information about the plurality of satellite reference points is position information.

13. The method according to claim 12, wherein the method further comprises:
sending the position information of the plurality of satellite reference points to the terminal device.

14. The method according to claim 12 or 13, wherein the position information of the plurality of satellite reference points is absolute coordinates, or the position information of the plurality of satellite reference points is relative coordinates relative to the service satellite.

15. The method according to claim 10 or 11, wherein positions of the plurality of satellite reference points are located on a moving trajectory of the service satellite and/or a moving trajectory of another satellite.

16. The method according to claim 15, wherein the information about the plurality of satellite reference points is time points corresponding to the plurality of satellite reference points.

17. The method according to claim 16, wherein the plurality of time points are absolute times, or the plurality of time points are relative times.

18. The method according to any one of claims 10 to 17, wherein before the determining a position of the terminal device based on the time information corresponding to the service satellite and the time information corresponding to the plurality of satellite reference points, the method further comprises:
correcting, based on a time at which the uplink reference signal sent by the terminal device is received, the time information corresponding to the service satellite and the time information corresponding to the plurality of satellite reference points.

19. A communication apparatus, wherein the apparatus comprises:
a processing unit, configured to obtain information about a plurality of satellite reference points, and
determine time information corresponding to a service satellite; and
a communication unit, configured to report, to the service satellite, time information corresponding to the plurality of satellite reference points and the time information corresponding to the service satellite, wherein the time information corresponding to the plurality of satellite reference points is determined based on the time information corresponding to the service satellite and the information about the plurality of satellite reference points.

20. The apparatus according to claim 19, wherein the time information corresponding to the service satellite is a moment at which a downlink signal of the service satellite is received; or
the time information corresponding to the service satellite is a frame number of a downlink signal of the service satellite; or
the time information corresponding to the service satellite is a time difference between a time at which a downlink signal of the service satellite is received and a time at which the downlink signal is sent by the service satellite; or
the time information corresponding to the service satellite is a time difference between a time at which a downlink signal of the service satellite is received and a time at which an uplink signal is sent to the service satellite; or
the time information corresponding to the service satellite is a timing advance TA for sending an uplink signal to the service satellite.

21. The apparatus according to claim 19 or 20, wherein when determining the time information corresponding to the service satellite, the processing unit is specifically configured to:
obtain a common TA, wherein the common TA is used for representing a round trip delay from the service satellite to an uplink synchronization common point; and
determine, based on the common TA, the time information corresponding to the service satellite.

22. The apparatus according to any one of claims 19 to 21, wherein the information about the plurality of satellite reference points is position information.

23. The apparatus according to claim 22, wherein when obtaining the information about the plurality of satellite reference points, the processing unit is specifically configured to:
receive the position information of the plurality of satellite reference points from the service satellite by using the communication unit.

24. The apparatus according to claim 22 or 23, wherein the position information of the plurality of satellite reference points is absolute coordinates, or the position information of the plurality of satellite reference points is relative coordinates relative to the service satellite.

25. The apparatus according to any one of claims 19 to 21, wherein positions of the plurality of satellite reference points are located on a moving trajectory of the service satellite and/or a moving trajectory of another satellite.

26. The apparatus according to claim 25, wherein the information about the plurality of satellite reference points is time points corresponding to the plurality of satellite reference points.

27. The apparatus according to claim 26, wherein the plurality of time points are absolute times, or the plurality of time points are relative times.

28. A communication apparatus, wherein the apparatus comprises:
a communication unit, configured to receive time information corresponding to a service satellite and time information corresponding to a plurality of satellite reference points that are sent by a terminal device, wherein the time information corresponding to the plurality of satellite reference points is determined based on the time information corresponding to the service satellite and information about the plurality of satellite reference points; and
a processing unit, configured to determine a position of the terminal device based on the time information corresponding to the service satellite and the time information corresponding to the plurality of satellite reference points.

29. The apparatus according to claim 28, wherein the time information corresponding to the service satellite is a moment at which a downlink signal of the service satellite is received; or
the time information corresponding to the service satellite is a frame number of a downlink signal of the service satellite; or
the time information corresponding to the service satellite is a time difference between a time at which a downlink signal of the service satellite is received and a time at which the downlink signal is sent by the service satellite; or
the time information corresponding to the service satellite is a time difference between a time at which a downlink signal of the service satellite is received and a time at which an uplink signal is sent to the service satellite; or
the time information corresponding to the service satellite is a timing advance TA for sending an uplink signal to the service satellite.

30. The apparatus according to claim 28 or 29, wherein the information about the plurality of satellite reference points is position information.

31. The apparatus according to claim 30, wherein the communication unit is further configured to:
send the position information of the plurality of satellite reference points to the terminal device.

32. The apparatus according to claim 30 or 31, wherein the position information of the plurality of satellite reference points is absolute coordinates, or the position information of the plurality of satellite reference points is relative coordinates relative to the service satellite.

33. The apparatus according to claim 28 or 29, wherein positions of the plurality of satellite reference points are located on a moving trajectory of the service satellite and/or a moving trajectory of another satellite.

34. The apparatus according to claim 33, wherein the information about the plurality of satellite reference points is time points corresponding to the plurality of satellite reference points.

35. The apparatus according to claim 34, wherein the plurality of time points are absolute times, or the plurality of time points are relative times.

36. The apparatus according to any one of claims 28 to 35, wherein the processing unit is further configured to:
before determining the position of the terminal device based on the time information corresponding to the service satellite and the time information corresponding to the plurality of satellite reference points, correct, based on a time at which the uplink reference signal sent by the terminal device is received, the time information corresponding to the service satellite and the time information corresponding to the plurality of satellite reference points.

37. A communication apparatus, comprising a processor and a memory, wherein the memory is configured to store program instructions; and when the processor executes the program instructions, the method according to any one of claims 1 to 9 is performed, or the method according to any one of claims 10 to 18 is performed.

38. A computer-readable storage medium, wherein the computer storage medium stores computer-readable instructions; and when the computer-readable instructions are run on a communication apparatus, the method according to any one of claims 1 to 9 is performed, or the method according to any one of claims 10 to 18 is performed.

39. A computer program product, wherein when the computer program product runs on a device, the device is enabled to perform the method according to any one of claims 1 to 9 or the method according to any one of claims 10 to 18.

40. A communication system, wherein the system comprises the apparatus according to any one of claims 19 to 27 and the apparatus according to any one of claims 28 to 36.
